# EUROPÄISCHE PATENTANMELDUNG

(11) **EP 2 088 561 A1**
(43) Veröffentlichungstag der Anmeldung: **12.08.2009**
(21) Anmeldenummer: 08002314.6
(22) Anmeldetag: 08.02.2008
(51) Int. Cl.: G07B 15/00, G07F 7/10, G06Q 20/00

(54) **Verfahren zur Durchführung von Kundenbindungsprogrammen**

(71) Anmelder: SkiData AG, 5083 Grödig/Salzburg (AT)
(72) Erfinder: Pamminger, Herbert, 4814 Neukirchen (AT); Fox, Dirk, 83483 Bischofswiesen (DE)
(74) Vertreter: Haft, von Puttkamer, Berngruber

(57) **Zusammenfassung**

Es wird ein Verfahren zur Durchführung von Kundenbindungsprogrammen vorgeschlagen, im Rahmen dessen für den Fall von Couponing die Coupons und für den Fall von Loyalitätsprogrammen die Punkte an ein tragbares Gerät bzw. Mobiltelefon übertragen bzw. vom tragbaren Gerät bzw. Mobiltelefon abgebucht werden, wobei die Coupons bzw. die Punkte im tragbaren Gerät bzw. im Mobiltelefon gespeichert oder zwischengespeichert werden.

## Beschreibung

Die vorliegende Erfindung bezieht sich auf ein Verfahren zur Durchführung von Kundenbindungsprogrammen gemäß dem Oberbegriff des Patentanspruchs 1. Insbesondere bezieht sich die Erfindung auf ein Verfahren zur Durchführung von Couponing und/oder zum Sammeln bzw. Einlösen von Punkten von Loyalitätsprogrammen.

Um die Umsätze von Unternehmen zu steigern sowie um bestehende Kunden zu behalten und neue Kunden zu gewinnen, sind zahlreiche Kundenbindungsprogramme entwickelt worden.

Als Couponing wird der Einsatz von Coupons durch ein Unternehmen zu Marketing- und Vertriebszwecken bezeichnet; hierbei verschaffen die Coupons dem Kunden des Unternehmens bei der Einlösung ggf. unter Beachtung bestimmter Einlösebedingungen in der Regel einen geldwerten Vorteil. Coupons werden beispielsweise dazu genutzt, um Verbraucher anzuregen, ein neues Produkt zu kaufen, die Abverkaufszahlen in einem Zeitraum signifikant zu erhöhen oder neu eingeführte Packungsformate zu erwerben.

Üblicherweise sind Coupons als Papiergutscheine ausgeführt; dies kann jedoch in nachteiliger Weise dazu führen, dass die Gutscheine verloren gehen können; zudem können Papiergutscheine leicht zerstört werden. Ein weiterer Nachteil der Papiergutscheine besteht darin, dass diese auf einfache Weise gestohlen werden können.

Des weiteren werden heutzutage Loyalitätsprogramme immer beliebter; hierbei können die Verbraucher, meistens in Abhängigkeit vom Umsatz, Punkte sammeln, die gegen Prämien oder Preisnachlässe eingelöst werden können.

Ein Beispiel für Loyalitätsprogramme sind die Vielfliegerprogramme, bei denen die bei einer Fluggesellschaft zurückgelegten Meilen als Punkte gespeichert werden. Bei vielen Vielfliegerprogrammen können auch bei Unternehmen, die nicht in der Reisebranche tätig sind, Prämienmeilen gesammelt werden, beispielsweise bei Kreditkartenunternehmen oder Kaufhäusern.

Aus dem Stand der Technik ist bekannt, RFID-Technologie zur Bereitstellung von Informationen auf einem mobilen Kommunikationsgerät, beispielsweise auf einem Mobiltelefon zu verwenden. Ferner ist bekannt, durch eine berührungslose RFID-Interaktion zwischen einem Smartposter und einem RFIDfähigen Gerät Informationen an das RFID-fähige Gerät zu übertragen.

In der Regel wird hierbei als RFID-Technologie NFC - Technologie eingesetzt (NFC - Technologie steht für Near-Field-Communication - Technologie, die bekannterweise eine auf RFID-Funktechnologie basierende Funktechnologie für kurze Distanzen ist).

Der vorliegenden Erfindung liegt die Aufgabe zugrunde, ein Verfahren zur Durchführung von Kundenbindungsprogrammen zur Verfügung zu stellen, durch dessen Durchführung sich die Kundenbindungsprogramme kundenfreundlicher gestalten. Insbesondere soll für den Fall von Couponing die Verwendung von Papiergutscheinen vermieden werden. Des weiteren soll für den Fall von Loyalitätsprogrammen ein Verfahren angegeben werden, durch dessen Durchführung die Gutschrift der Punkte sowie die Abbuchung bzw. das Einlösen von Punkten für Prämien beschleunigt und vereinfacht wird.

Diese Aufgabe wird durch die Merkmale des Patentanspruchs 1gelöst. Weitere erfindungsgemäße Ausgestaltungen und Vorteile gehen aus den Unteransprüchen hervor.

Demnach wird vorgeschlagen, dass für den Fall von Couponing die Coupons und für den Fall von Loyalitätsprogrammen die Punkte an ein tragbares Gerät bzw. Mobiltelefon übertragen bzw. vom tragbaren Gerät bzw. Mobiltelefon abgebucht werden, wobei die Coupons bzw. die Punkte im tragbaren Gerät bzw. Mobiltelefon gespeichert oder zwischengespeichert werden. Für den Fall der Zwischenspeicherung werden die Coupons bzw. die Punkte nach der Übertragung an das tragbares Gerät bzw. Mobiltelefon an einen Server übermittelt bzw. vor der Abbuchung von einem Server heruntergeladen.

Das tragbare Gerät im Sinne der Erfindung kann beispielsweise ein Notebook oder ein PDA sein, wobei es vorzugsweise auch eine GSM-basierte Kommunikation ermöglicht bzw. die Funktionalität eines Mobiltelefons aufweist.

Zur Durchführung von Couponing wird insbesondere vorgeschlagen, dass die Coupons mittels einer RFID- bzw. NFC-Interaktion zwischen einem RFID- bzw. NFC-Label enthaltend einen Coupon Code, der einer Vergütung bzw. einem Preisnachlass entspricht und einem RFID- bzw. NFC-fähigen tragbaren Gerät bzw. einem Mobiltelefon des Benutzers in elektronischer Form an das RFID- bzw. NFC-fähige tragbare Gerät bzw. an das Mobiltelefon übermittelt und dort gespeichert werden. Hierbei ist jedem Coupon ein eineindeutiger Couponcode zugeordnet, wobei, um einen Missbrauch zu vermeiden, ein Couponcode vorzugsweise nur einmal im tragbaren Gerät bzw. im Mobiltelefon des Benutzers gespeichert werden kann. Alternativ dazu kann vorgesehen sein, dass ein Couponcode innerhalb einer vorgegebenen Zeitspanne, beispielsweise innerhalb 24 Stunden nur einmal gespeichert werden kann.

RFID- bzw. NFC-Label enthaltend einen Couponcode können beispielsweise in Zeitschriften, auf Smartposter oder auf bestimmten Produkten angebracht sein. Es ist auch möglich, derartige RFID- bzw. NFC-Label an bestimmten Bereichen eines Geschäftes bzw. Kaufhauses anzubringen, um auf diese Weise den Kunden einen Anreiz zu bieten, das gesamte Sortiment des Geschäftes bzw. des Kaufhauses kennen zu lernen.

Die Coupons können gemäß der Erfindung in elektronischer Form auch über ein Mobilfunknetz auf das Mobiltelefon des Benutzers übertragen werden, was beispielsweise der Fall sein kann, wenn der Benutzer im Internet bestimmte Seiten besucht oder Einkäufe tätigt.

Gemäß der Erfindung kann der Besitzer des tragbaren Gerätes bzw. des Mobiltelefons, wenn er die Coupons einlösen möchte, an einem POS (Point of Sale) des Couponherausgebers bzw. an der Kasse die Coupons anhand einer RFID- bzw. NFC-Interaktion zwischen dem tragbaren Gerät bzw. dem Mobiltelefon und einer RFID- bzw. NFC-fähigen Einrichtung auslesen lassen, wobei der Betrag, dem die Coupons entsprechen, vom zu zahlenden Betrag abgezogen wird. Nach dem Auslesen der Coupons werden diese im tragbaren Gerät bzw. im Mobiltelefon als verwendet gekennzeichnet oder optional gelöscht.

Gemäß einer weiteren Ausgestaltung der Erfindung kann vorgesehen sein, dass anstelle einer Reduzierung des zu zahlenden Betrags an einem POS eine Reduzierung der Parkgebühr für ein mit einem POS bzw. mit dem Couponherausgeber assoziiertes Parkhaus realisiert wird.

Zu diesem Zweck werden die im tragbaren Gerät bzw. Mobiltelefon des Benutzers gespeicherten Coupons zur Berechnung der Parkgebühr mittels einer RFID- bzw. NFC-Interaktion an einen Parkautomaten übermittelt. Nach dem Übermitteln der Coupons werden diese im tragbaren Gerät bzw. im Mobiltelefon als verwendet gekennzeichnet oder optional gelöscht. Alternativ oder zusätzlich dazu können die Coupons nach der Übermittlung im Parkautomaten bzw. im Server des Parkhauses als entwertet gekennzeichnet werden.

Die Bezahlung der Parkgebühr kann über im tragbaren Gerät bzw. Mobiltelefon gespeicherten Kreditkarten- oder Bankverbindungsdaten, über eine Direktbezahlung über die Telefonnummer des Mobiltelefons, oder durch Auslösen einer Kreditkartentransaktion durch Auslesen der Kreditkartendaten von einer maschinenlesbaren oder RFID-lesbaren Kreditkarte erfolgen.

Alternativ dazu kann durch das tragbare Gerät bzw. das Mobiltelefon des Benutzers eine berührungslose Verbindung, beispielsweise über ein Mobilfunknetz, mittels WLAN oder über Bluetooth ® mit einem Server des Parkhauses aufgebaut werden, wobei anhand der im tragbaren Gerät bzw. im Mobiltelefon gespeicherten Coupons die noch offene Parkgebühr berechnet wird. Diese kann vorzugsweise über im tragbaren Gerät bzw. Mobiltelefon gespeicherten Kreditkarten- oder Bankverbindungsdaten oder über eine Direktbezahlung über die Telefonnummer des Mobiltelefons entrichtet werden. Die bei der Berechnung der Parkgebühr berücksichtigten Coupons werden im tragbaren Gerät bzw. im Mobiltelefon als verwendet gekennzeichnet oder optional gelöscht. Alternativ oder zusätzlich dazu können die Coupons im Server als entwertet gekennzeichnet werden.

Die Herstellung der Verbindung kann dadurch initiiert werden, dass ein an das tragbare Gerät bzw. das Mobiltelefon übermittelter Link aktiviert wird; der Link dann beispielsweise mittels einer NFC-Interaktion zwischen einem am POS oder im Parkhaus vorgesehenen NFC-Label und dem tragbaren Gerät bzw. dem Mobiltelefon an das tragbare Gerät bzw. das Mobiltelefon übermittelt werden.

Nach erfolgter Bezahlung der Parkgebühr wird gemäß einer Weiterbildung der Erfindung an das tragbare Gerät bzw. an das Mobiltelefon ein ein- oder zweidimensionaler Barcode übermittelt, der an der Ausfahrt des Parkhauses von einer Einrichtung umfassend einen Scanner direkt vom Display des tragbaren Gerätes bzw. des Mobiltelefons eingelesen wird, um dem Benutzer Auslass zu gewähren.

Altarnativ zu einem Barcode kann nach erfolgter Bezahlung der Parkgebühr an das tragbare Gerät bzw. an das Mobiltelefon eine eineindeutige Ziffern-Buchstaben-Kombination übermittelt werden, welche an der Ausfahrt des Parkhauses von einer RFID- bzw. NFC - fähigen Einrichtung anhand einer RFID- bzw. NFC - Interaktion zwischen der Einrichtung und dem tragbaren Gerät bzw. dem Mobiltelefon ausgelesen wird, um dem Benutzer Auslass zu gewähren.

Gemäß einer weiteren Ausgestaltung der Erfindung werden die an das tragbare Gerät bzw. Mobiltelefon des Benutzers übermittelten Coupons durch Herstellung einer berührungslosen Verbindung mit einem Server des Couponherausgebers an den Server übermittelt, wo sie gespeichert und einem Konto des Benutzers zugeordnet werden. Nach der Übermittlung werden die Coupons im tragbaren Gerät bzw. Mobiltelefon gelöscht. Auf diese Weise kann ein Missbrauch der Coupons durch unbefugte Personen weitgehend vermieden werden. Wenn der Benutzer die Coupons einlösen möchte, werden diese nach der Herstellung einer Verbindung mit einem Server des Couponherausgebers vom Server menügesteuert an das tragbare Gerät bzw. das Mobiltelefon übermittelt.

Gemäß einem weiteren Aspekt der Erfindung wird vorgeschlagen, Punkte von Loyalitätsprogrammen mittels eines RFID- bzw. NFC-fähigen tragbaren Geräts bzw. des Mobiltelefons zu sammeln bzw. für Prämien einzulösen.

Hierbei kann vorgesehen sein, dass die beim Erwerb von Gütern oder beim Bezug von Dienstleistungen gutzuschreibenden Punkte eines Loyalitätsprogramms mittels einer RFID- bzw. NFC-Interaktion an einem POS an ein tragbares Gerät bzw. an ein Mobiltelefon des Benutzers übermittelt werden. Analog zu den Coupons können Punkte gemäß der Erfindung in elektronischer Form auch über ein Mobilfunknetz auf das Mobiltelefon des Benutzers übertragen werden, was beispielsweise der Fall sein kann, wenn der Benutzer im Internet Einkäufe bei Leistungspartnern des Loyalitätsprogramms tätigt.

Anschließend können die übermittelten Punkte durch Herstellung einer berührungslosen Verbindung mit einem Server des Loyalitätsprogramms an den Server übermittelt werden, wo sie erfasst und einem Konto des Benutzers zugeordnet werden.

Analog zu dieser Vorgehensweise können auch die zum Erwerb von Prämien erforderlichen Punkte eines Loyalitätsprogramms durch eine RFID- bzw. NFC-Interaktion am POS vom tragbaren Gerät bzw. vom Mobiltelefon des Benutzers abgebucht werden. Für den Fall, dass die Punkte des Loyalitätsprogramms auf einem Server des Loyalitätsprogramms gespeichert sind, werden die zum Prämienerwerb erforderlichen Punkte vorher mittels einer berührungslosen Verbindung (z.B. über ein Mobilfunknetzwerk, WLAN, Bluetooth ®) vom Server an das tragbare Gerät bzw. an das Mobiltelefon übertragen.

Durch die erfindungsgemäße Speicherung bzw. Zwischenspeicherung der Punkte von Loyalitätsprogrammen auf einem tragbaren Gerät oder einem Mobiltelefon werden in vorteilhafter Weise das Sammeln von Punkten sowie die Abbuchung bzw. das Einlösen von Punkten für Prämien direkter und übersichtlicher gestaltet.

## Patentansprüche

1. Verfahren zur Durchführung von Kundenbindungsprogrammen, **dadurch gekennzeichnet, dass** für den Fall von Couponing die Coupons und für den Fall von Loyalitätsprogrammen die Punkte an ein tragbares Gerät bzw. Mobiltelefon übertragen bzw. vom tragbaren Gerät bzw. Mobiltelefon abgebucht werden, wobei die Coupons bzw. die Punkte im tragbaren Gerät bzw. im Mobiltelefon gespeichert oder zwischengespeichert werden, wobei für den Fall der Zwischenspeicherung die Coupons bzw. die Punkte nach der Übertragung an das tragbare Gerät bzw. Mobiltelefon an einen Server übermittelt bzw. vor der Abbuchung von einem Server heruntergeladen werden.

2. Verfahren zur Durchführung von Kundenbindungsprogrammen, nach Anspruch 1, **dadurch gekennzeichnet, dass** für den Fall von Couponing die Coupons mittels einer RFID- bzw. NFC-Interaktion zwischen einem RFID- bzw. NFC-Label, enthaltend einen Coupon Code, der einer Vergütung bzw. einem Preisnachlass entspricht und einem RFID- bzw. NFC-fähigen tragbaren Gerät bzw. einem Mobiltelefon des Benutzers in elektronischer Form an das RFID- bzw. NFC-fähige tragbare Gerät bzw. an das Mobiltelefon übermittelt und dort gespeichert werden.

3. Verfahren zur Durchführung von Kundenbindungsprogrammen, nach Anspruch 1, **dadurch gekennzeichnet, dass** für den Fall von Couponing die Coupons in elektronischer Form über ein Mobilfunknetz auf ein Mobiltelefon des Benutzers übertragen werden.

4. Verfahren zur Durchführung von Kundenbindungsprogrammen, nach Anspruch 2 oder 3, **dadurch gekennzeichnet, dass** jedem Coupon ein eineindeutiger Couponcode zugeordnet ist, wobei, um einen Missbrauch zu vermeiden, ein Couponcode nur einmal im tragbaren Gerät bzw. im Mobiltelefon des Benutzers gespeichert werden kann.

5. Verfahren zur Durchführung von Kundenbindungsprogrammen, nach Anspruch 2 oder 3, **dadurch gekennzeichnet, dass** jedem Coupon ein eineindeutiger Couponcode zugeordnet ist, wobei, um einen Missbrauch zu vermeiden, ein Couponcode innerhalb einer vorgegebenen Zeitspanne nur einmal im tragbaren Gerät bzw. im Mobiltelefon des Benutzers gespeichert werden kann.

6. Verfahren zur Durchführung von Kundenbindungsprogrammen, nach Anspruch 2, 4 oder 5, **dadurch gekennzeichnet, dass** RFID- bzw. NFC-Label enthaltend einen Couponcode in Zeitschriften, auf Smartposter, auf bestimmten Produkten und/oder an bestimmten Bereichen eines Geschäftes bzw. Kaufhauses angebracht werden.

7. Verfahren zur Durchführung von Kundenbindungsprogrammen, nach einem der vorangehenden Ansprüche, **dadurch gekennzeichnet, dass** zum Einlösen von Coupons an einem POS (Point of Sale) des Couponherausgebers bzw. an einer Kasse die Coupons anhand einer RFID- bzw. NFC-Interaktion zwischen dem tragbaren Gerät bzw. dem Mobiltelefon des Benutzers und einer RFID- bzw. NFC-fähigen Einrichtung ausgelesen werden, wobei der Betrag, dem die Coupons entsprechen, vom zu zahlenden Betrag abgezogen wird und wobei nach dem Auslesen der Coupons diese im tragbaren Gerät bzw. im Mobiltelefon als verwendet **gekennzeichnet** oder gelöscht werden.

8. Verfahren zur Durchführung von Kundenbindungsprogrammen, nach einem der Ansprüche 2 bis 6, **dadurch gekennzeichnet, dass** mittels der Coupons die Parkgebühr für ein mit einem POS bzw. mit dem Couponherausgeber assoziiertes Parkhaus reduziert wird, wobei zu diesem Zweck die im tragbaren Gerät bzw. Mobiltelefon des Benutzers gespeicherten Coupons zur Berechnung der Parkgebühr mittels einer RFID- bzw. NFC-Interaktion an einen Parkautomaten übermittelt werden, wobei nach der Übermittlung der Coupons diese im tragbaren Gerät bzw. im Mobiltelefon als verwendet **gekennzeichnet** oder optional gelöscht werden und/oder im Parkautomaten bzw. im Server des Parkhauses als entwertet **gekennzeichnet** werden.

9. Verfahren zur Durchführung von Kundenbindungsprogrammen, nach Anspruch 8, **dadurch gekennzeichnet, dass** die Bezahlung der Parkgebühr über im tragbaren Gerät bzw. Mobiltelefon gespeicherten Kreditkarten- oder Bankverbindungsdaten, über eine Direktbezahlung über die Telefonnummer des Mobiltelefons, oder durch Auslösen einer Kreditkartentransaktion durch Auslesen der Kreditkartendaten von einer maschinenlesbaren oder RFID-lesbaren Kreditkarte erfolgt.

10. Verfahren zur Durchführung von Kundenbindungsprogrammen, nach einem der Ansprüche 2 bis 6, **dadurch gekennzeichnet, dass** mittels der Coupons die Parkgebühr für ein mit einem POS bzw. mit dem Couponherausgeber assoziiertes Parkhaus reduziert wird, wobei zu diesem Zweck durch das tragbare Gerät bzw. das Mobiltelefon des Benutzers eine berührungslose Verbindung mit einem Server des Parkhauses aufgebaut wird und wobei anhand der gespeicherten Coupons die noch offene Parkgebühr berechnet wird.

11. Verfahren zur Durchführung von Kundenbindungsprogrammen, nach Anspruch 10, **dadurch gekennzeichnet, dass** die Bezahlung der Parkgebühr über im tragbaren Gerät bzw. Mobiltelefon gespeicherten Kreditkarten- oder Bankverbindungsdaten oder über eine Direktbezahlung über die Telefonnummer des Mobiltelefons entrichtet wird.

12. Verfahren zur Durchführung von Kundenbindungsprogrammen, nach einem der Ansprüche 8 bis 11, **dadurch gekennzeichnet, dass** nach erfolgter Bezahlung der Parkgebühr an das tragbare Gerät bzw. an das Mobiltelefon ein ein- oder zweidimensionaler Barcode übermittelt wird, der an der Ausfahrt des Parkhauses von einer Einrichtung umfassend einen Scanner direkt vom Display des tragbaren Gerätes bzw. des Mobiltelefons eingelesen wird, um dem Benutzer Auslass zu gewähren.

13. Verfahren zur Durchführung von Kundenbindungsprogrammen, nach einem der Ansprüche 8 bis 11, **dadurch gekennzeichnet, dass** nach erfolgter Bezahlung der Parkgebühr an das tragbare Gerät bzw. an das Mobiltelefon eine eineindeutige Ziffern-Buchstaben-Kombination übermittelt wird, welche an der Ausfahrt des Parkhauses von einer RFID- bzw. NFC - fähigen Einrichtung anhand einer RFID- bzw. NFC - Interaktion zwischen der Einrichtung und dem tragbaren Gerät bzw. dem Mobiltelefon ausgelesen wird, um dem Benutzer Auslass zu gewähren.

14. Verfahren zur Durchführung von Kundenbindungsprogrammen, nach einem der vorangehenden Ansprüche, **dadurch gekennzeichnet, das** die an das tragbare Gerät bzw. Mobiltelefon des Benutzers übermittelten Coupons durch Herstellung einer berührungslosen Verbindung mit einem Server des Couponherausgebers an den Server übermittelt werden, wo sie gespeichert und einem Konto des Benutzers zugeordnet werden, wobei wenn der Benutzer die Coupons einlösen möchte, diese nach der Herstellung einer Verbindung mit einem Server des Couponherausgebers vom Server menügesteuert an das tragbare Gerät bzw. das Mobiltelefon übermittelt werden.

15. Verfahren zur Durchführung von Kundenbindungsprogrammen, nach Anspruch 1, **dadurch gekennzeichnet, dass** für den Fall von Loyalitätsprogrammen Punkte von Loyalitätsprogrammen mittels eines RFID- bzw. NFC-fähigen tragbaren Geräts bzw. Mobiltelefons gesammelt bzw. zum Erwerb von Prämien eingelöst werden.

16. Verfahren zur Durchführung von Kundenbindungsprogrammen, nach Anspruch 15, **dadurch gekennzeichnet, dass** die beim Erwerb von Gütern oder beim Bezug von Dienstleistungen gutzuschreibenden Punkte eines Loyalitätsprogramms mittels einer RFID- bzw. NFC-Interaktion an einem POS an ein tragbares Gerät bzw. an ein Mobiltelefon des Benutzers übermittelt werden.

17. Verfahren zur Durchführung von Kundenbindungsprogrammen, nach Anspruch 16, **dadurch gekennzeichnet, dass** die übermittelten Punkte durch Herstellung einer berührungslosen Verbindung mit einem Server des Loyalitätsprogramms an den Server übermittelt werden, wo sie erfasst und einem Konto des Benutzers zugeordnet werden.

18. Verfahren zur Durchführung von Kundenbindungsprogrammen, nach Anspruch 15, **dadurch gekennzeichnet, dass** zum Erwerb von Prämien erforderlichen Punkte eines Loyalitätsprogramms durch eine RFID- bzw. NFC-Interaktion an einem POS vom tragbaren Gerät bzw. vom Mobiltelefon des Benutzers abgebucht werden, wobei für den Fall, dass die Punkte des Loyalitätsprogramms auf einem Server des Loyalitätsprogramms gespeichert sind, die zum Prämienerwerb erforderlichen Punkte mittels einer berührungslosen Verbindung vom Server an das tragbare Gerät bzw. an das Mobiltelefon übertragen werden.

19. Verfahren zur Durchführung von Kundenbindungsprogrammen, nach einem der vorangehenden Ansprüche, **dadurch gekennzeichnet, dass** die berührlose Verbindung zwischen dem tragbaren Gerät bzw. dem Mobiltelefon und einem Server eine Mobilfunknetzwerk-, WLAN- oder Bluetooth ® - Verbindung ist.

## Geänderte Patentansprüche

### Geänderte Patentansprüche gemäss Regel 137(2) EPÜ.

**1.** Verfahren zur Durchführung von
Kundenbindungsprogrammen, wobei für den Fall von Couponing die Coupons und für den Fall von Loyalitätsprogrammen die Punkte an ein tragbares Gerät bzw. Mobiltelefon übertragen bzw. vom tragbaren Gerät bzw. Mobiltelefon abgebucht werden, **dadurch gekennzeichnet, dass** für den Fall von Couponing die Coupons mittels einer RFID- bzw. NFC-Interaktion zwischen einem RFID- bzw. NFC-Label, enthaltend einen Coupon Code, der einer Vergütung bzw. einem Preisnachlass entspricht und einem RFID- bzw. NFC-fähigen tragbaren Gerät bzw. einem Mobiltelefon des Benutzers in elektronischer Form an das RFID- bzw. NFC-fähige tragbare Gerät bzw. an das Mobiltelefon übermittelt und dort gespeichert werden und dass für den Fall von Loyalitätsprogrammen Punkte von Loyalitätsprogrammen mittels eines RFID- bzw. NFC-fähigen tragbaren Geräts bzw. Mobiltelefons und einer RFID- bzw. NFC-Interaktion gesammelt bzw. zum Erwerb von Prämien eingelöst werden, wobei die Coupons bzw. die Punkte im tragbaren Gerät bzw. im Mobiltelefon gespeichert oder zwischengespeichert werden, wobei für den Fall der Zwischenspeicherung die Coupons bzw. die Punkte nach der Übertragung an das tragbare Gerät bzw. Mobiltelefon an einen Server übermittelt bzw. vor der Abbuchung von einem Server herunter geladen werden.

**2.** Verfahren zur Durchführung von
Kundenbindungsprogrammen, nach Anspruch 1, **dadurch gekennzeichnet, dass** jedem Coupon ein eineindeutiger Couponcode zugeordnet ist, wobei, um einen Missbrauch zu vermeiden, ein Couponcode nur einmal im tragbaren Gerät bzw. im Mobiltelefon des Benutzers gespeichert werden kann.

**3.** Verfahren zur Durchführung von
Kundenbindungsprogrammen, nach Anspruch 1, **dadurch gekennzeichnet, dass** jedem Coupon ein eineindeutiger Couponcode zugeordnet ist, wobei, um einen Missbrauch zu vermeiden, ein Couponcode innerhalb einer vorgegebenen Zeitspanne nur einmal im tragbaren Gerät bzw. im Mobiltelefon des Benutzers gespeichert werden kann.

**4.** Verfahren zur Durchführung von
Kundenbindungsprogrammen, nach Anspruch 1, 2 oder 3, **dadurch gekennzeichnet, dass** RFID- bzw. NFC-Label enthaltend einen Couponcode in Zeitschriften, auf Smartposter, auf bestimmten Produkten und/oder an bestimmten Bereichen eines Geschäftes bzw. Kaufhauses angebracht werden.

**5.** Verfahren zur Durchführung von
Kundenbindungsprogrammen, nach einem der vorangehenden Ansprüche, **dadurch gekennzeichnet, dass** zum Einlösen von Coupons an einem POS (Point of Sale) des Couponherausgebers bzw. an einer Kasse die Coupons anhand einer RFID- bzw. NFC-Interaktion zwischen dem tragbaren Gerät bzw. dem Mobiltelefon des Benutzers und einer RFID- bzw. NFC-fähigen Einrichtung ausgelesen werden, wobei der Betrag, dem die Coupons entsprechen, vom zu zahlenden Betrag abgezogen wird und wobei nach dem Auslesen der Coupons diese im tragbaren Gerät bzw. im Mobiltelefon als verwendet **gekennzeichnet** oder gelöscht werden.

**6.** Verfahren zur Durchführung von Kundenbindungsprogrammen, nach einem der Ansprüche 1 bis 5, **dadurch gekennzeichnet, dass** mittels der Coupons die Parkgebühr für ein mit einem POS bzw. mit dem Couponherausgeber assoziiertes Parkhaus reduziert wird, wobei zu diesem Zweck die im tragbaren Gerät bzw. Mobiltelefon des Benutzers gespeicherten Coupons zur Berechnung der'Parkgebühr mittels einer RFID- bzw. NFC-Interaktion an einen Parkautomaten übermittelt werden, wobei nach der Übermittlung der Coupons diese im tragbaren Gerät bzw. im Mobiltelefon als verwendet **gekennzeichnet** oder optional gelöscht werden und/oder im Parkautomaten bzw. im Server des Parkhauses als entwertet **gekennzeichnet** werden.

**7.** Verfahren zur Durchführung von Kundenbindungsprogrammen, nach Anspruch 6, **dadurch gekennzeichnet, dass** die Bezahlung der Parkgebühr über im tragbaren Gerät bzw. Mobiltelefon gespeicherten Kreditkarten- oder Bankverbindungsdaten, über eine Direktbezahlung über die Telefonnummer des Mobiltelefons, oder durch Auslösen einer Kreditkartentransaktion durch Auslesen der Kreditkartendaten von einer maschinenlesbaren oder RFID-lesbaren Kreditkarte erfolgt.

**8.** Verfahren zur Durchführung von
Kundenbindungsprogrammen, nach einem der Ansprüche 1 bis 5, **dadurch gekennzeichnet, dass** mittels der Coupons die Parkgebühr für ein mit einem POS bzw. mit dem Couponherausgeber assoziiertes Parkhaus reduziert wird, wobei zu diesem Zweck durch das tragbare Gerät bzw. das Mobiltelefon des Benutzers eine berührungslose Verbindung mit einem Server des Parkhauses aufgebaut wird und wobei anhand der gespeicherten Coupons die noch offene Parkgebühr berechnet wird.

**9.** Verfahren zur Durchführung von
Kundenbindungsprogrammen, nach Anspruch 8, **dadurch gekennzeichnet, dass** die Bezahlung der Parkgebühr über im tragbaren Gerät bzw. Mobiltelefon gespeicherten Kreditkarten- oder Bankverbindungsdaten oder über eine Direktbezahlung über die Telefonnummer des Mobiltelefons entrichtet wird.

**10.** Verfahren zur Durchführung von
Kundenbindungsprogrammen, nach einem der Ansprüche 6 bis 9, **dadurch gekennzeichnet, dass** nach erfolgter Bezahlung der Parkgebühr an das tragbare Gerät bzw. an das Mobiltelefon ein ein- oder zweidimensionaler Barcode übermittelt wird, der an der Ausfahrt des Parkhauses von einer Einrichtung umfassend einen Scanner direkt vom Display des tragbaren Gerätes bzw. des Mobiltelefons eingelesen wird, um dem Benutzer Auslass zu gewähren.

**11.** Verfahren zur Durchführung von
Kundenbindungsprogrammen, nach einem der Ansprüche 6 bis 9, **dadurch gekennzeichnet, dass** nach erfolgter Bezahlung der Parkgebühr an das tragbare Gerät bzw. an das Mobiltelefon eine eineindeutige Ziffern-Buchstaben-Kombination übermittelt wird, welche an der Ausfahrt des Parkhauses von einer RFID- bzw. NFC - fähigen Einrichtung anhand einer RFID- bzw. NFC - Interaktion zwischen der Einrichtung und dem tragbaren Gerät bzw. dem Mobiltelefon ausgelesen wird, um dem Benutzer Auslass zu gewähren.

**12.** Verfahren zur Durchführung von
Kundenbindungsprogrammen, nach einem der vorangehenden Ansprüche, **dadurch gekennzeichnet**, das die an das tragbare Gerät bzw. Mobiltelefon des Benutzers übermittelten Coupons durch Herstellung einer berührungslosen Verbindung mit einem Server des Couponherausgebers an den Server übermittelt werden, wo sie gespeichert und einem Konto des Benutzers zugeordnet werden, wobei wenn der Benutzer die Coupons einlösen möchte, diese nach der Herstellung einer Verbindung mit einem Server des Couponherausgebers vom Server menügesteuert an das tragbare Gerät bzw. das Mobiltelefon übermittelt werden.

**13.** Verfahren zur Durchführung von
Kundenbindungsprogrammen, nach Anspruch 1, **dadurch gekennzeichnet, dass** die beim Erwerb von Gütern oder beim Bezug von Dienstleistungen gutzuschreibenden Punkte eines Loyalitätsprogramms mittels einer RFID- bzw. NFC-Interaktion an einem POS an ein tragbares Gerät bzw. an ein Mobiltelefon des Benutzers übermittelt werden.

**14.** Verfahren zur Durchführung von
Kundenbindungsprogrammen, nach Anspruch 13, **dadurch gekennzeichnet, dass** die übermittelten Punkte durch Herstellung einer berührungslosen Verbindung mit einem Server des Loyalitätsprogramms an den Server übermittelt werden, wo sie erfasst und einem Konto des Benutzers zugeordnet werden.

**15.** Verfahren zur Durchführung von
Kundenbindungsprogrammen, nach Anspruch 1, **dadurch gekennzeichnet, dass** zum Erwerb von Prämien erforderlichen Punkte eines Loyalitätsprogramms durch eine RFID- bzw. NFC-Interaktion an einem POS vom tragbaren Gerät bzw. vom Mobiltelefon des Benutzers abgebucht werden, wobei für den Fall, dass die Punkte des Loyalitätsprogramms auf einem Server des Loyalitätsprogramms gespeichert sind, die zum Prämienerwerb erforderlichen Punkte mittels einer berührungslosen Verbindung vom Server an das tragbare Gerät bzw. an das Mobiltelefon übertragen werden.

**16.** Verfahren zur Durchführung von
Kundenbindungsprogrammen, nach einem der vorangehenden Ansprüche, **dadurch gekennzeichnet, dass** die berührlose Verbindung zwischen dem tragbaren Gerät bzw. dem Mobiltelefon und einem Server eine Mobilfunknetzwerk-, WLAN- oder Bluetooth ® - Verbindung ist.
